# EUROPÄISCHE PATENTSCHRIFT

(11) **EP 2 024 089 B1**
(45) Veröffentlichungstag und Bekanntmachung des Hinweises auf die Patenterteilung: **17.08.2011**
(21) Anmeldenummer: 07722493.9
(22) Anmeldetag: 30.05.2007
(51) Int. Cl.: B01L 3/00

(54) **KÜVETTE**
CUVETTE
CUVETTE

(30) Priorität: 30.05.2006 DE 102006025477
(43) Veröffentlichungstag der Anmeldung: 18.02.2009
(73) Patentinhaber: EKF - diagnostic GmbH, 39179 Barleben (DE)
(72) Erfinder: ASSMANN, Frank, 39104 Magdeburg (DE); DUMSCHAT, Christa, 39179 Barleben (DE); WALTER, Berthold, 39167 Niederndodeleben (DE); GABRIEL, Günter, 39114 Magdeburg (DE)
(74) Vertreter: Lins, Edgar
(86) Internationale Anmeldenummer: PCT/DE2007/000979
(87) Internationale Veröffentlichungsnummer: WO 2007/137572

(56) Entgegenhaltungen:
- EP-A1- 1 389 443
- EP-A1- 1 393 807
- EP-A2- 0 949 002
- EP-A2- 1 096 254
- WO-A-2005/119211

## Beschreibung

Die Erfindung betrifft eine Küvette zur Durchführung einer Messung an einer Flüssigkeit, mit einem Küvettenkörper mit einer Kavität in Form eines schmalen Spaltes, der bei der Herstellung des Küvettenkörpers im Spritzgießverfahren mittels eines Schiebers gebildet ist und der zwischen zwei wenigstens annähernd parallelen Wandflächen ausgebildet ist und begrenzt ist durch eine Innenwandung sowie durch eine zur Umgebung offene Einzugskante, von der aus die Flüssigkeit unter Wirkung einer Kapillarkraft in die einen Messbereich ausbildende Kavität eingezogen wird, wobei der Küvettenkörper eine Längsachse und die Innenwandung sich von der Einzugskante erstreckende Längswandabschnitte und einen die Längswandabschnitte verbindenden Stirnbereich aufweist und mit einem nass aufgetragenen chemischen Reagens, das anschließend durch Abtransport von verdampften Gasen aus der Kavität heraus getrocknet ist, beschichtet ist und wobei die beiden Wandflächen des schmalen Spaltes im Messbereich einen geringen Abstand zueinander aufweisen, der sich zur Einzugskante hin leicht vergrößert, um die Entformung des Schiebers bei der Herstellung des Küvettenkörpers im Spritzgießverfahren zu ermöglichen.

Eine derartige Küvette ist durch EP 0 821 784 B1 bekannt. Der die Kavität bildende Spalt ist in einen rechteckigen, streifenförmigen einstückig hergestellten Küvettenkörper eingeformt, der durch die offene Einzugskante der Kavität unsymmetrisch abgeschlossen wird, sodass sich eine spitzwinkelige Ecke ausbildet, die als Einzugsbereich für einen Blutstropfen dient. Die Innenwandungen der Küvette sind mit einem chemischen Reagens beschichtet, wodurch beispielsweise der Blutinhaltsstoff Hämoglobin chemisch mit einer Farbreaktion umgesetzt wird. Durch eine Transmissionsmessung durch die Wandflächen innerhalb des Messbereichs hindurch ist so eine quantitative Bestimmung des Hämoglobingehalts des Blutes möglich.

Die bekannte Küvette ist in ihrer Formgebung so ausgebildet, dass der am Rand der Kavität eingezogene Blutstropfen entlang einer geradlinigen Innenwandung bevorzugt in die Kavität durch Kapillarwirkung eingesogen wird, sodass sich der etwa kreisförmig ausgebildete Messbereich vom Rand her füllt. Die Innenwandung geht von einem Eingangs-Längswand-Abschnitt über einen kreisbogenförmigen Abschnitt des Messbereichs in einen Ausgangs-Längswandabschnitt über, der in einem spitzen Winkel zum Eingangs-Längswandabschnitt steht und aufgrund der unsymmetrischen Ausbildung des Endes der Küvette wesentlich kürzer ist als der Eingangs-Längswandabschnitt. Zur Unterstützung des angestrebten Strömungsverlaufs ist die Spalthöhe mit einem Kanalbereich der Innenwandung stufenförmig oder konisch zulaufend gegenüber der Spalthöhe der Kavität im Messbereich verringert. Hierdurch soll eine höhere Kapillarkraft in einem sich an die Innenwandung anschließenden Kanal wirksam werden.

Durch US 4,088,448 ist eine Küvette bekannt, die ebenfalls in einem streifenförmigen rechteckigen Grundkörper ausgebildet ist. Die in dem Grundkörper durch einen Spalt gebildete Kavität ist symmetrisch in Längsrichtung des Grundkörpers ausgebildet und weist zwei aufeinander zulaufende Längswandabschnitte auf, die durch einen quer zur Längsachse verlaufenden Stirnwandabschnitt mit der Innenwandung verbunden werden. In der Praxis geschieht das Einziehen eines Bluttropfens in die Kavität Ober eine Ecke des streifenförmigen Grundkörpers, an dem sich die kurze offene Einzugskante befindet. Aufgrund der symmetrisch zulaufenden Ausbildung der Kavität kommt es In dem geschlossenen Ende der Kavität häufig zu einem Lufteinschluss wegen einer unzureichenden Füllung. In einer Variante befindet sich die Kavität in der Mitte des streifenförmigen Grundkörpers und weist in Längsrichtung der Küvette zwei jeweils bis zur kurzen Kante reichenden Einzugskanäle auf. Eine derartige Ausbildung ist weder praktikabel handhabbar noch wirtschaftlich herstellbar.

Ein Problem der bekannten einstückig hergestellten Küvetten besteht darin, dass die Beschichtung der Wandflächen mit dem chemischen Reagens häufig nicht in gleichmäßiger Weise erfolgt. Das Aufbringen des Reagens erfolgt in üblicher Weise dadurch, dass die Kavität mit dem in Lösung gebrachten Reagens gefüllt wird und dass sich das Reagens auf den Wandflächen der Kavität beim durch Wärmezufuhr verstärkten Trocknungsvorgang absetzt. Dabei wird insbesondere am Rand der Kavität eine verringerte Schichtdicke für das Reagens erzielt.

Eine unzureichende Beschichtung mit einem Reagens führt zu einer Verfälschung des Messergebnisses, wenn die Messung über den gesamten Messbereich vorgenommen wird, weil dann eine verringerte Beschichtung an den Rändern des Messbereichs eine Auswirkung auf die Messung hat. Darüber hinaus ist die Beschichtung mit dem chemischen Reagens für die Benetzung der Wandfläche mit der Flüssigkeit von Bedeutung, sodass ein gleichmäßiges Einziehen der Flüssigkeit in die Kavität durch die Kapillarwirkung nicht erzielt wird, wenn eine ungleichmäßige Beschichtung mit dem Reagens stattgefunden hat.

Die genannten Probleme treten nicht auf, wenn die Küvette gemäß EP 1 389 443 A1 aus zwei Teilen, nämlich einem Basisteil und einem das Basisteil abdeckenden Deckelteil gebildet wird. Die dabei verwirklichten Spalten werden durch eine entsprechende Formung des einseitig offenen Basisteils gebildet, während das Deckelteil als glatte Deckfläche ausgebildet sein kann. Die bekannte Küvette weist auf einer schmalen Seite einen offenen Spalt auf, der mittig im Bereich der schmalen Kante einen Einzugsspalt ausbildet. In Längsrichtung hinter dem Einzugsspalt befindet sich ein Spalt geringerer Tiefe, der durch eine stufenförmige Erhöhung des Basisteils gebildet. Zwischen einer ebenen Fläche der Erhöhung und dem Deckelteil befindet sich der Messbereich der Küvette. Demgemäß kann auf der Fläche der Erhöhung und auf der gegenüberliegenden Fläche des Deckelteils ein Reagenz aufgebracht sein, mit dem die eingezogene Flüssigkeit. Insbesondere Blut zur Durchführung einer Farbänderung, reagiert. Der Bereich des Einzugsspalts und des Spalts des Messbereichs ist umgeben von zwei seitlichen Kanälen und einem die seitllchen Kanäle bogenförmig verbindenden stirnseitigen Kanal, die jeweils eine größere Tiefe als der Einzugsspalt bzw. der Spalt im Messbereich haben. Diese Kanäle dienen dazu, überschüssiges Blut aufzunehmen, das nach der Befüllung des Einzugsspalts und des Spalts im Messbereich noch von der Haut eines Patienten durch die Kapillarwirkung abgesaugt wird, sodass ein möglichst geringer Blutrest auf der Haut des Patienten verbleibt. Die Herstellung derartiger zweiteiliger Küvetten ist aufwendig, neben dem Herstellungsaufwand im Spritzgießverfahren noch ein erheblicher Montageaufwand erforderlich. Für eine Massenanwendung finden daher ausschließlich einstückige Küvetten Verwendung, deren Spalt beim Spritzgießvorgang mittels eines Schiebers gebildet wird, der nach dem Erstarren des thermoplastischen Spritzgießmaterials aus dem Material der Küvette herausgezogen wird, wodurch der Spalt gebildet ist.

Der Erfindung liegt daher die Aufgabe zugrunde, eine im Spritzgießverfahrens mittels eines Schiebers hergestellte Küvette so auszubilden, dass sie In gleichmäßiger Weise mit dem Reagenz beschichtet werden kann, in dem die Kavität der Küvette vollständig und gleichmäßig mit der das Reagenz ausbildenden Flüssigkeit durch Kapillarwirkung befüllbar ist und eine fehlerfreie Messung aus einer gleichmäßigen Beschichtung der Küvette mit dem chemischen Reagenz ermöglicht.

Zur Lösung dieser Aufgabe ist erfindungsgemäß eine Küvette der eingangs erwähnten Art dadurch gekennzeichnet, dass die Einzugskante mit Abstand von den Längswandabschnitten einen Einzugsbereich aufweist, dass die Längswandabschnitte beidseitig mit Abstand von einer Einzugsmittenachse verlaufen, die sich mittig vom Einzugsbereich zum Stirnbereich erstreckt, dass der Stirnbereich eine Öffnung zur Umgebung aufweist und dass entlang den Längswandabschnitten Randbereiche ausgebildet sind, In denen ein gegenüber dem Abstand der benachbarten parallelen Wandflächen größerer Abstand zwischen Begrenzungsflächen ausgebildet ist.

Mit der vorliegenden Küvette wird die als optimiert erkannte asymmetrische Form der Kavität und der Innenwandung verlassen, durch die die Flüssigkeit bei einem Längswandabschnitt in die Kavität eingezogen wird, am Rand des Messbereichs umgelenkt wird und anschließend über einen kurzen Längswandabschnitt zur offenen Einzugskante zurückgeleitet wird. Vielmehr sieht die erfindungsgemäße Küvette vor, dass die Flüssigkeit zur vollständigen Füllung der Kavität etwa mittig an der Einzugskante eingezogen wird und auch über einen mittigen Spalt durch Kapillarwirkung zum Stirnbereich wandert. Sofern dabei Luft eingeschlossen wird, kann diese in dem Stirnbereich, also jenseits des Messbereichs, durch die Öffnung zur Umgebung entweichen. Die Öffnung kann dabei so ausgebildet sein, dass durch die Öffnung keine Flüssigkeit aus der Küvette austritt.

Die entlang den Längswandabschnitten beiderseits der Einzugsrichtung vorgesehenen Randbereiche mit einem größeren Wandabstand der beiden zu den Wandflächen parallelen Begrenzungsflächen führt zu einer verringerten Kapillarwirkung in den Randbereichen, sodass die Füllung der Kavität schneller in dem mittleren Bereich der Kavität erfolgt und zu den Randbereichen hin eine zurückbleibende Strömungsfront ausgebildet wird, da die Strömungsgeschwindigkeit in den Randbereichen aufgrund der verringerten Kapillarwirkung geringer ist. Der Abstand zwischen den Begrenzungsflächen der Randbereiche ist zweckmäßigerweise mindestens 20 µm, vorzugsweise mindestens 50 µm, weiter bevorzugt mindestens 100 µm größer als der Abstand der benachbarten parallelen Wandflächen. Die erfindungsgemäß ausgebildeten Randbereiche führen dazu, dass eine Beschichtung der Wandflächen der Kavität des einstückigen Küvettenkörpers außerhalb der Randbereiche in wesentlich gleichmäßigerer Weise erfolgt, als dies bei den herkömmlichen Küvettenformen der Fall war. Bei einem Nassauftrag des chemischen Reagens, das anschließend trocknet, führen die Randbereiche mit seinem vergrößerten Höhenquerschnitt zu einem beschleunigten Abtransport der verdampften Gase aus der Kavität heraus, wodurch eine gleichmäßige Schichtbildung durch Trocknung außerhalb der Randbereiche möglich wird. Da sich der Messbereich zwischen den Randbereichen befindet, lässt sich der Messbereich mit dem chemischen Reagens gleichmäßig beschichten.

Aus der beschriebenen Funktion der Küvette ergibt sich, dass der Einzugsbereich vorzugsweise mittig in der offenen Einzugskante liegt. Das Einziehen der Flüssigkeit, beispielsweise eines Blutstropfens, erfolgt somit nicht - wie bisher - im Bereich eines Längswandabschnitts, sondern mit Abstand zwischen den Längswandabschnitten, wodurch sich ein von den Längswandabschnitten unabhängiges Strömungsprofil ausbildet.

Dies wird dadurch unterstützt, dass in einer bevorzugten Ausführungsform der Erfindung der Einzugsbereich gegenüber dem übrigen Bereich der Einzugskante vorstehend ausgebildet ist. Dadurch wird das Einziehen der Flüssigkeit in dem mittigen Einzugsbereich unterstützt.

Der Einzugsbereich kann dabei durch eine Ausbildung der beiden Wandflächen an der offenen Einzugskante mit zwei vorstehenden Vorsprüngen mit einer mittigen Ausnehmung gebildet sein. Die mittige Ausnehmung kann dabei die etwa dreieckförmige Kerbe aufweisen.

In einer bevorzugten Ausführungsform der Erfindung verläuft die Längsachse der Küvette durch den Einzugsbereich, wobei vorzugsweise die Einzugsmittenachse und die Längsachse zumindest annähernd zusammenfallen.

Die mit einer vergrößerten Höhe ausgebildeten Randbereiche münden vorzugsweise In den Stirnbereich ein. Sie können zur Unterstützung einer gleichmäßigen, etwa parabelförmigen Strömungsfront schräg zur Einzugsrichtung aufeinander verlaufen. Dabei kann es zweckmäßig sein, wenn die Breite der Randbereiche zum Stirnbereich hin abnimmt und wenn die Randbereiche - wie auch die Längswandabschnitte - geradlinig ausgebildet sind.

Der Stirnbereich schließt sich vorzugsweise quer zu den Randbereichen verlaufend an diese an.

Zur Anpassung an die Strömungsfront kann es zweckmäßig sein, wenn der Stirnbereich gekrümmt ausgebildet ist und insbesondere die Form eines Kreisbogenabschnitts aufweist. Die Öffnung des Stirnbereichs, durch die der Stirnbereich mit der Umgebung kommuniziert, kann sich vorzugsweise über seine gesamte Länge erstrecken. Bevorzugt ist ferner, wenn die Öffnung des Stirnbereichs in beiden, den Stirnbereich begrenzenden Wandflächen ausgebildet ist.

Eine Ausführungsform der Erfindung, die den Austritt der Flüssigkeit aus der Öffnung des Stimbereichs sicher unterbindet, sieht vor, dass sich der Spalt der Kavität mit seinen Wandflächen in den Stirnbereich hinein mit in der Höhe verringerten Wandstücken erstreckt. Insbesondere können die in den Stirnbereich hineinragenden Wandstücke spitz zulaufende Kanten aufweisen. Dadurch wird eine große Strömungsquerschnittsfläche für durch die Flüssigkeit aus der Kavität herausgedrückte Luft realisiert, andererseits aber der freie Querschnitt für die eine Oberflächenspannung aufweisende Flüssigkeit so verringert, dass die Flüssigkeit aufgrund ihrer Oberflächenspannung nicht austreten kann.

Die Erfindung soll im Folgenden anhand eines in der Zeichnung dargestellten Ausführungsbeispiels näher erläutert werden. Es zeigen:
- Figur 1: eine Draufsicht auf eine Ausführungsform einer erfindungsge- mäßen Küvette;
- Figur 2: ein Detail Y der Draufsicht gemäß Figur 1 in vergrößerter Dar- stellung;
- Figur 3: eine Seitenansicht der Küvette gemäß Figur 1;
- Figur 4: ein Detail X gemäß Figur 3 in einem Schnitt entlang der Linie A- A aus Figur 1;
- Figur 5: einen Querschnitt entlang der Linie B-B in Figur 2;
- Figur 6: ein Detail Z aus Figur 5 in vergrößerter Darstellung.

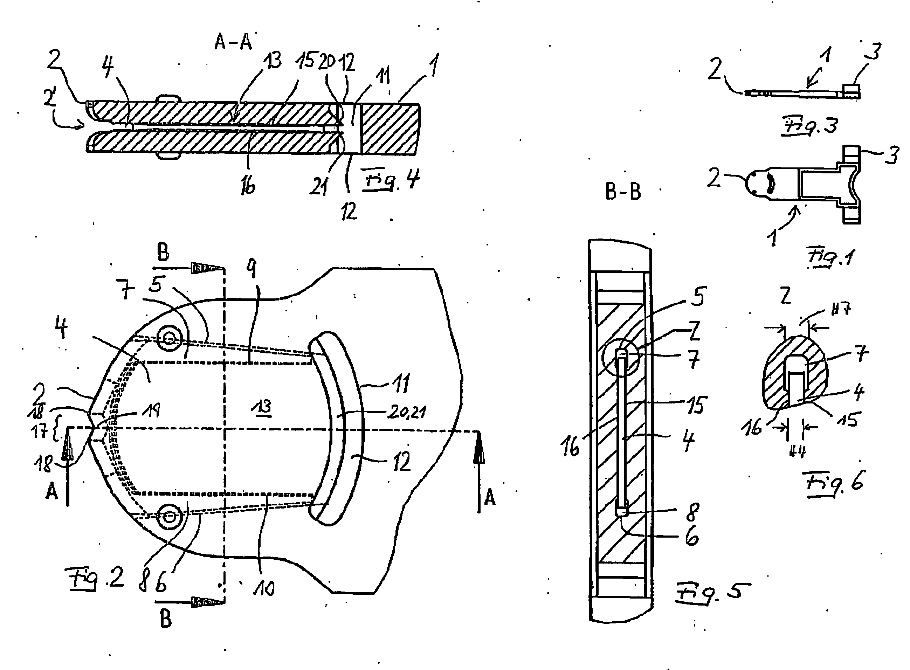

Die in Figur 1 dargestellte Küvette weist einen länglichen und im Wesentlichen rechteckigen, im Spritzgussverfahren einstückig hergestellten Küvettenkörper 1 auf, der an einem Ende mit einer offenen Einzugskante 2 und an dem gegenüberliegenden Ende mit Handhabungsansätzen 3 ausgebildet ist.

Die vergrößerte Darstellung in Figur 2 verdeutlicht, dass an dem Ende der Einzugskante 2 der Gehäusekörper 1 eine Kavität 4 in Form eines zur Einzugskante 4 hin offenen Spaltes aufweiset. Die Breite der Kavität 4 ist durch zwei Längswandabschnitte 5, 6 begrenzt, die sich von der Einzugskante 2 etwa in Längsrichtung (vgl. Schnittlinie A-A in Figur 2) des Gehäusekörpers 1 erstrecken. Dabei verlaufen die beiden Längswandabschnitte 5, 6 von der Einzugskante 2 ausgehend schräg etwas aufeinander zu. An die beiden geradlinigen Längswandabschnitte 5, 6 schließt sich jeweils ein Randbereich 7, 8 an, dessen Breite von der Einzugskante 2 ausgehend derart abnimmt, dass eine von dem Längswandabschnitt 5, 6 abgewandte Kante 9, 10 parallel zur Längsachse des Gehäusekörpers 1 verläuft. Die Randbereiche 7, 8 münden in einen Stirnbereich 11 ein, der als Kreisbogenabschnitt gekrümmt ausgebildet ist.

Wie Figur 4 verdeutlicht, bildet der Stirnbereich 11 über seine gesamte Länge eine schlitzförmige Öffnung 12 auf der Oberseite und Unterseite des Gehäusekörpers 1 (in der Ansicht der Figur 1) aus.

Etwa mittig zwischen der Einzugskante 2 und dem Stirnbereich 11 befindet sich ein Messbereich 13, der eine polierte Oberfläche des aus einem transparenten Material gebildeten Gehäusekörpers 1 aufweist.

Wie Figur 4 verdeutlicht, ist die Kavität 4 durch einen Längsspalt gebildet, der durch eine obere Wandfläche 15 und durch eine dazu annähernd parallel verlaufende untere Wandfläche 16 begrenzt ist. Im Messbereich 13 weise die beiden Wandflächen 15, 16 einen geringen Abstand zueinander auf, der sich zum Einzugsspalt 2 hin leicht vergrößert, um die Entformung eines den Spalt in einem Spritzgießvorgang für den einstückigen Gehäusekörper 1 ausbildenden Schiebers in üblicher Technik zu ermöglichen.

Figur 2 verdeutlicht, dass die Einzugskante 2 sich beidseitig zur Längsachse des Gehäusekörpers 1 erstreckt und einen Einzugsbereich 17 bildet, der an dem am weitesten vorstehenden Teil der abgerundeten Einzugskante 2 bildet. Der Einzugsbereich ist mit zwei Vorsprüngen 18 versehen, die zwischen sich eine kerbförmige Ausnehmung 19 aufweisen. In dem dargestellten Ausführungsbeispiel liegt die kerbförmige Ausnehmung 19 in der Längsachse des Gehäusekörpers 1.

Die durch den Spalt gebildete Kavität 4 erstreckt sich von der Einzugskante 2 weg bis zum Stirnbereich 11, der jenseits des Messbereichs 13 liegt. Im Stirnbereich 11 sind die Wandflächen 15, 16 ausbildende Wandstücke 20, 21 für die Wandflächen 15, 16 im Wesentlichen geradlinig fortgesetzt, während sie mit abgeschrägten Außenseiten in den Stirnbereich 11 ragen, sodass sie eine Spitze mit abnehmender Wandstärke aufweisen.

Die axiale Länge des Stimbereichs 11 beträgt beispielsweise 1 mm. Durch die in den Stirnbereich 11 hereinragenden Wandstücke 20, 21, mit der geringen Spalthöhe zwischen den Wandstücken 20, 21 und der spitzen Ausbildung der Enden der Wandstücke 20, 21 verbleibt die Flüssigkeit, vorzugsweise Blut, in der Kavität 4 und kann den Gehäusekörper 1 durch die Öffnungen 12 ohne externe Krafteinwirkung nicht verlassen.

Die Querschnittsdarstellung der Figur 5 verdeutlicht, dass die Randbereiche 7, 8 entlang den Längswandabschnitten 5, 6 kanalartig ausgebildet sind und eine größere Höhe aufweisen als die Kavität 4 im Messbereich 13. Die vergrößerte Darstellung der Figur 6 verdeutlicht eine Höhe H 4 der Kavität 4 im Messbereich 13, die deutlich geringer ist als eine Höhe H 7 des Randbereichs 7.

Die Höhe H 4 beträgt größenordnungsmäßig zwischen 0,12 und 0,18 mm, während die Höhe H 7 des Randbereichs 7 mindestens 50 µm, vorzugsweise mehr als 100 um größer ist und beispielsweise zwischen 0,25 und 0,35 mm beträgt.

Zur Verdeutlichung der Größenordnung der Höhe der Kavität 4 werden für den Längsschnitt der Figur 4 verschiedene Höhenmaße angegeben. Die Kavität 4 weist ihre geringste Höhe zum Stirnbereich 11 hin auf. Die Höhe jenseits des Messbereichs 13 beträgt beispielsweise 0,12 mm. In der Mitte des Messbereichs 13 kann die Höhe beispielsweise 0,15 mm betragen, während die Höhe am Anfang des Messbereichs 13 0,18 mm betragen kann. Vom Einzugsspalt 2' aus gesehen vor dem Messbereich 13 kann eine Höhe 0,20 mm groß sein.

Zur Erleichterung des Einziehens eines Bluttropfens ist der Einzugsspalt 2' mit einer Höhe von beispielsweise 0,35 mm ausgebildet.

Die dargestellte Küvette führt zu einer Beschichtung aller Innenwände der Kavität 4, wobei etwaige Unregelmäßigkeiten der Beschichtung in den kanalartigen Randbereichen 7, 8 auftreten, während im gesamten Messbereich 13 eine gleichmäßige Beschichtung vorhanden ist und somit eine quantitativ gleichmäßige Reaktion mit der eingezogenen Flüssigkeit erfolgt. Wegen der gleichmäßigen Beschichtung der Kavität 4 zwischen den Randbereichen 7, 8 wird auch eine gleichmäßige Kapillarwirkung im gesamten Bereich der Kavität 4- zwischen den Randbereichen 7, 8 - zum Einziehen der Flüssigkeit in die Kavität 4 erreicht.

## Patentansprüche

1. Küvette zur Durchführung einer Messung an einer Flüssigkeit, mit einem Küvettenkörper (1) mit einer Kavität (4) in Form eines schmalen Spaltes, der bei der Herstellung des Küvettenkörpers (1) im Spritzgießverfahren mittels eines Schiebers gebildet ist und der zwischen zwei wenigstens annähernd parallelen Wandflächen (15, 16) ausgebildet ist und begrenzt ist durch eine Innenwandung (5, 6, 11) sowie durch eine zur Umgebung offene Einzugskante (2), von der aus die Flüssigkeit unter Wirkung einer Kapillarkraft in die einen Messbereich (13) ausbildende Kavität (4) eingezogen wird, wobei der Küvettenkörper eine Längsachse und die Innenwandung (5, 6, 11) sich von der Einzugskante erstreckende Längswandabschnitte (5, 6) und einen die Längswandabschnitte (5, 6) verbindenden Stirnbereich (11) aufweist und mit einem nass aufgetragenen chemischen Reagens, das anschließend durch Abtransport von verdampften Gasen aus der Kavität (4) heraus getrocknet ist, beschichtet ist und wobei die beiden Wandflächen (15, 16) des schmalen Spaltes im Messbereich (13) einen geringen Abstand zueinander aufweisen, der sich zur Einzugskante (2) hin leicht vergrößert, um die Entformung des Schiebers bei der Herstellung des Küvettenkörpers (1) im Spritzgießverfahren zu ermöglichen, **dadurch gekennzeichnet, dass** die Einzugskante (2) mit Abstand von den Längswandabschnitten (5, 6) einen Einzugsbereich (17) aufweist, dass die Längswandabschnitte (5, 6) beidseitig mit Abstand von einer Einzugsmittenachse verlaufen, die sich mittig vom Einzugsbereich (17) zum Stirnbereich (11) erstreckt, dass der Stirnbereich (11) eine Öffnung (12) zur Umgebung aufweist und dass entlang den Längswandabschnitten (5, 6) Randbereiche (7, 8) ausgebildet sind, in denen ein gegenüber dem Abstand (H 4) der benachbarten parallelen Wandflächen (15, 16) größerer Abstand (H 7) zwischen Begrenzungsflächen ausgebildet ist.

2. Küvette nach Anspruch 1, **dadurch gekennzeichnet, dass** der Einzugsbereich (17) gegenüber dem übrigen Bereich der Einzugskante (2) vorstehend ausgebildet ist.

3. Küvette nach Anspruch 1 oder 2, **dadurch gekennzeichnet, dass** die Längsachse durch den Einzugsbereich (17) verläuft.

4. Küvette nach einem der Ansprüche 1 bis 3, **dadurch gekennzeichnet, dass** die Randbereiche (7, 8) symmetrisch zur Einzugsmittenachse verlaufen.

5. Küvette nach einem der Ansprüche 1 bis 4, **dadurch gekennzeichnet, dass** die Randbereiche (7, 8) in den Stirnbereich (11) einmünden.

6. Küvette nach Anspruch 4 oder 5, **dadurch gekennzeichnet, dass** die Randbereiche (7,8) schräg zur Einzugsmittenachse aufeinander zu verlaufen.

7. Küvette nach einem der Ansprüche 1 bis 6, **dadurch gekennzeichnet, dass** die Breite der Randbereiche (7, 8) zum Stirnbereich (11) hin abnimmt.

8. Küvette nach einem der Ansprüche 1 bis 7, **dadurch gekennzeichnet, dass** der Stirnbereich (11) gekrümmt ausgebildet ist.

9. Küvette nach einem der Ansprüche 1 bis 8, **dadurch gekennzeichnet, dass** sich die Öffnung (12) des Stimbereichs (11) über seine gesamte Länge erstreckt.

10. Küvette nach einem der Ansprüche 1 bis 9, **dadurch gekennzeichnet, dass** die Öffnung (12) des Stimbereichs (11) in beiden den Stirnbereich (11) begrenzenden Wandflächen (15, 16) ausgebildet ist.

11. Küvette nach einem der Ansprüche 1 bis 10, **dadurch gekennzeichnet, dass** sich der Spalt der Kavität (4) mit seinen Wandflächen (15, 16) in den Stirnbereich (11) hinein mit in der Höhe verringerten Wandstücken (20, 21) erstreckt.

12. Küvette nach Anspruch 11, **dadurch gekennzeichnet, dass** die in den Stirnbereich (11) hineinragenden Wandstücke (20, 21) spitz zulaufende Kanten aufweisen.

13. Küvette nach einem der Ansprüche 1 bis 12, **dadurch gekennzeichnet, dass** die Wandflächen (15, 16) mit einem chemischen Reagens beschichtet sind.

14. Küvette nach Anspruch 13, **dadurch gekennzeichnet, dass** das Reagens in flüssiger Form durch Einfüllen in die Kavität (4) eingebracht und durch Trocknen auf die Wandflächen (15, 16) aufgebracht ist.

15. Küvette nach einem der Ansprüche 1 bis 14, **dadurch gekennzeichnet, dass** der Abstand (H 7) zwischen den Begrenzungsflächen der Randbereiche (7, 8) mindestens 50 µm, vorzugsweise mindestens 100 µm, größer ist als der Abstand (H 4) der benachbarten parallelen Wandflächen (15, 16).

## Claims

1. A cuvette for taking a measurement of a liquid, having a cuvette body (1) with a cavity (4) in the form of a narrow slot which, when the cuvette body (1) is made by injection molding, is formed by means of an insert and is created between two at least approximately parallel wall surfaces (15, 16) and is delimited by an inner wall (5, 6, 11) and by an entrance edge (2) which is open to the outside and from which, by capillary action, the liquid is drawn into the cavity (4), which forms a measuring region (13), wherein the cuvette body has a longitudinal axis, and the inner wall (5, 6, 11) has longitudinal wall sections (5, 6) that extend from the entrance edge (2) and an end region (11) that connects the longitudinal wall sections (5, 6), and is coated with a chemical reagent that is applied in the wet state and is then dried as a result of evaporation of gases being transported out of the cavity (4), and wherein the two wall surfaces (15, 16) of the narrow slot are at a small spacing from one another within the measuring region (13), which spacing increases slightly towards the entrance edge (2), in order to enable the removal of the insert when forming the cuvette body (1) in an injection molding process **characterized in that** the entrance edge (2) has an entrance region (17) at a spacing from the longitudinal wall sections (5, 6), **in that** the longitudinal wall sections (5, 6) extend at a spacing on either side of a center axis of drawing that runs centrally from the entrance region (17) to the end region (11), **in that** the end region (11) has an opening (12) to the outside, and **in that** marginal regions (7, 8) are formed along the longitudinal wall sections (5, 6) and form therein a greater spacing (H7) between delimiting surfaces than the spacing (H4) between the adjacent parallel wall surfaces (15, 16).

2. A cuvette as claimed in claim 1, **characterized in that** the entrance region (17) is formed to jut forward in relation to the rest of the region of the entrance edge (2).

3. A cuvette as claimed in claim 1 or 2, **characterized in that** the longitudinal axis extends through the entrance region (17).

4. A cuvette as claimed in one of claims 1 to 3, **characterized in that** the marginal regions (7, 8) run symmetrically in relation to the drawing center axis.

5. A cuvette as claimed in one of claims 1 to 4, **characterized in that** the marginal regions (7, 8) open into the end region (11).

6. A cuvette as claimed in one of claims 4 or 5, **characterized in that** the marginal regions (7, 8) extend toward one another in a direction oblique in relation to the drawing center axis.

7. A cuvette as claimed in claim 1 to 6, **characterized in that** the width of the marginal regions (7, 8) diminishes toward the end region (11).

8. A cuvette as claimed in one of claims 1 to 7, **characterized in that** the end region (11) is of curved form.

9. A cuvette as claimed in one of claims 1 to 8, **characterized in that** the opening (12) of the end region (11) extends over its entire length.

10. A cuvette as claimed in one of claims 1 to 9, **characterized in that** the opening (12) of the end region (11) is formed in both the wall surfaces (15, 16) that delimit the end region (11).

11. A cuvette as claimed in one of claims 1 to 10, **characterized in that** the slot of the cavity (4) extends by means of its wall surfaces (15, 16) into the end region (11), with wall portions (20, 21) that are reduced in height.

12. A cuvette as claimed in claim 11, **characterized in that** the wall portions (20, 21) that project into the end region (11) have edges that taper to a point.

13. A cuvette as claimed in one of claims 1 to 12, **characterized in that** the wall surfaces (15, 16) are coated with a chemical reagent.

14. A cuvette as claimed in claim 13, **characterized in that** the reagent is filled into the cavity (4) in liquid form and is applied by being dried on the wall surfaces (15, 16).

15. A cuvette as claimed in one of claims 1 to 14, **characterized in that** the spacing (H7) between the delimiting surfaces of the marginal regions (7, 8) is at least 50 µm, preferably at least 100 µm, greater than the spacing (H4) between the adjacent parallel wall surfaces (15, 16).

## Revendications

1. Cuvette pour la prise de mesure sur un fluide, avec un corps de cuvette (1) avec une cavité (4) en forme de fente étroite, qui est formée lors de la fabrication du corps de cuvette (1) par un tiroir dans le procédé de moulage par injection et qui est réalisée entre deux surfaces de paroi parallèles (15, 16), au moins approximativement, et est délimitée par une paroi intérieure (5, 6, 11) ainsi que par une arête d'entrée (2) ouverte en périphérie, par laquelle le fluide est aspiré par capillarité dans la cavité (4) formant une région de mesure (13), dans laquelle le corps de cuvette présente un axe longitudinal et la paroi intérieure (5, 6, 11) présente des sections de paroi longitudinale (5, 6) s'étendant depuis l'arête d'entrée (2) et des sections de paroi longitudinale (5, 6) reliées à une région frontale (11) et est recouvert par un réactif chimique appliqué à l'état humide qui est ensuite séché par l'évacuation des gaz humides hors de la cavité (4) et dans laquelle les deux surfaces de paroi (15, 16) de la fente étroite présentent dans la zone de mesure (13) un écart faible l'une avec l'autre, qui s'agrandit légèrement en direction de l'arête d'entrée (2) pour permettre le démoulage du tiroir lors de la fabrication du corps de cuvette (1) par procédé de moulage par injection, **caractérisée en ce que** l'arête d'entrée (2) présente une zone d'entrée (17) par son écartement avec les sections de paroi longitudinale (5, 6), **en ce que** les sections de paroi longitudinale (5, 6) ont un parcours écarté d'un axe central d'entrée qui s'étend de façon centrée entre la région d'entrée (17) et la région frontale (11), **en ce que** la région frontale (11) présente une ouverture (12) vers l'extérieur et **en ce que** le long des sections de paroi longitudinale (5, 6) sont réalisées des régions de bord (7, 8), dans lesquelles est réalisé un écart (H7) entre surfaces délimitantes plus grand que l'écart (H4) entre les surfaces de paroi parallèles (15, 16) voisines.

2. Cuvette selon la revendication 1, **caractérisée en ce que** la région d'entrée (17) est réalisée contre la région restante d'une arête d'entrée préalable.

3. Cuvette selon l'une des revendications 1 ou 2, **caractérisée en ce que** l'axe longitudinal traverse la région d'entrée (17).

4. Cuvette selon l'une des revendications 1 à 3, **caractérisée en ce que** le parcours des régions de bord (7, 8) est symétrique autour de l'axe central d'entrée.

5. Cuvette selon l'une des revendications 1 à 4, **caractérisée en ce que** les régions de bord (7, 8) débouchent dans la région frontale (11).

6. Cuvette selon l'une des revendications 4 ou 5, **caractérisée en ce que** les régions de bord (7, 8) ont un parcours l'une vers l'autre de façon oblique par rapport à l'axe central d'entrée.

7. Cuvette selon l'une des revendications 1 à 6, **caractérisée en ce que** la largeur des régions de bord (7, 8) diminue en direction de la région frontale (11).

8. Cuvette selon l'une des revendications 1 à 7, **caractérisée en ce que** la région frontale (11) est réalisée d'une forme courbe.

9. Cuvette selon l'une des revendications 1 à 8, **caractérisée en ce que** l'ouverture (12) de la région frontale (11) s'étend sur toute sa longueur.

10. Cuvette selon l'une des revendications 1 à 9, **caractérisée en ce que** l'ouverture (12) de la région frontale (11) est réalisée dans les deux surfaces de paroi (15, 16) délimitant la région frontale (11).

11. Cuvette selon l'une des revendications 1 à 10, **caractérisée en ce que** la fente de la cavité (4) avec ses surfaces de paroi (15, 16) s'étend dans la région frontale (11) avec des morceaux de paroi (20, 21) d'une hauteur décroissante.

12. Cuvette selon la revendication 11, **caractérisée en ce que** les morceaux de parois (20, 21) en surplomb dans la région frontale (11) présente des bords se terminant en une forme aigüe.

13. Cuvette selon l'une des revendications 1 à 12, **caractérisée en ce que** les surfaces de paroi (15, 16) sont recouvertes avec un réactif chimique.

14. Cuvette selon la revendication 13, **caractérisée en ce que** le réactif est amené sous forme fluide par remplissage de la cavité (4) et est apposé sur les surfaces de paroi (15, 16) par séchage.

15. Cuvette selon l'une des revendications 1 à 14, **caractérisée en ce que** l'écart (H7) entre les surfaces de délimitation des régions de bord (7, 8) est plus grand d'au moins 50 µm, et de préférence d'au moins 100 µm, que l'écart (H4) des surfaces de paroi parallèles (15, 16) voisines.
